# DEMANDE DE BREVET EUROPEEN

(11) **EP 0 767 364 A1**
(43) Date de publication de la demande: **09.04.1997**
(21) Numéro de dépôt: 96402063.0
(22) Date de dépôt: 27.09.1996
(51) Int. Cl.: G01M 1/02

(54) **Equilibreuse de roue de véhicule**

(30) Priorité: 04.10.1995 FR 9511655
(71) Demandeur: MULLER BEM, F-28000 Chartres (FR)
(72) Inventeur: Coetsier, Paul, 77400 Pomponne (FR); Sauzay, Olivier, 28630 Coudray (FR)
(74) Mandataire: Boutin, Antoine

(57) **Abrégé**

Une équilibreuse de roue de véhicule comporte un bâti 1 de support, une tête 3 d'entraînement en rotation et un organe de protection enveloppant la roue montée. L'organe de protection comporte une première coque 6 fixe par rapport au bâti 1 de support et une deuxième coque 7 rabattable articulée autour d'un axe de rotation 8 sensiblement horizontal.

Le bâti 1 comporte une ouverture 20 et un décrochement latéral 21 apte à recevoir les fourches de levage d'un engin de manutention.

Application à l'équilibrage de roues de véhicule.

## Description

L'invention est relative à une équilibreuse de roue de véhicule, du type comportant un bâti de support, une tête d'entraînement en rotation apte à recevoir de manière démontable une roue à équilibrer et comportant des capteurs appropriés reliés à une centrale électronique de mesure, de commande et de contrôle interactifs, ainsi qu'un organe de protection enveloppant la roue montée de manière à éviter une projection indésirable vers l'extérieur de particules et à protéger l'opérateur lors de la rotation de la roue.

Ces équilibreuses de roue de type connu sont prévues pour équilibrer des roues de diamètres de jante et de largeurs de jante variables, qui sont montées à cet effet sur la tête d'entraînement en rotation. En raison de la grande variation possible de dimensions et de poids des roues à équilibrer, il est nécessaire d'équiper ces équilibreuses d'un organe de protection de dimension relativement importante dont l'ouverture et la fermeture manuelle est rendue difficile si l'on ne dispose pas d'un moyen d'assistance au rabattement de l'organe de protection ou si l'on n'équipe pas cet organe de protection d'un contrepoids permettant d'équilibrer la masse de la coque de protection.

Cet organe de protection est relativement encombrant et nécessite pour son ouverture une emprise au sol importante à l'arrière de la machine : ceci conduit les utilisateurs des équilibreuses de type connu, à laisser un espace vide inoccupé sur toute la longueur de l'équilibreuse à l'arrière de celle-ci. Ceci s'avère pénalisant lorsque l'équilibreuse est disposée contre un mur.

Un but de l'invention est de créer une équilibreuse de roue de véhicule dont l'organe de protection est facilement rabattable à la main sans nécessiter aucun moyen d'assistance ni aucun contrepoids, tout en permettant l'équilibrage de roues sur une grande plage de diamètres et de largeurs de jante et dont l'emprise au sol est inférieure à celle des équilibreuses de l'art antérieur.

L'invention a pour objet une équilibreuse de roue de véhicule, du type comportant un bâti de support, une tête d'entraînement en rotation apte à recevoir de manière démontable une roue à équilibrer et comportant des capteurs appropriés reliés une centrale électronique de mesure, de commande et de contrôle interactifs, ainsi qu'un organe de protection enveloppant la roue montée de manière à éviter une projection indésirable vers l'extérieur de particules et à protéger l'opérateur lors de la rotation de la roue, caractérisée en ce que l'organe de protection est réalisé en deux parties : une première coque fixe par rapport au bâti de support et une deuxième coque rabattable articulée autour d'un axe de rotation sensiblement horizontal, de manière à réduire la masse déplaçable en permettant l'ouverture et la fermeture manuelles de l'organe de protection sans moyen d'assistance et sans contrepoids et réduire l'emprise au sol de l'équilibreuse.

Selon d'autres caractéristiques de l'invention :
- la première coque fixe présente une extrémité supérieure s'étendant sensiblement radialement par rapport au centre d'entraînement en rotation de la roue, cette extrémité supérieure étant coiffée avec un jeu permettant le rabattement par une première extrémité de la deuxième coque rabattable ;
- l'angle au centre d'entraînement en rotation de la roue de la deuxième coque rabattable est supérieur à l'angle au centre d'entraînement en rotation de la roue de la première coque fixe ;
- la première coque présente une extrémité inférieure formant un logement de réception et de maintien de la deuxième coque rabattue en position ouverte ;
- la deuxième coque rabattable est montée sur un châssis tubulaire articulé autour dudit axe de rotation sensiblement horizontal ;
- la deuxième coque rabattable porte une poignée ou organe analogue de préhension et de rabattement ;
- les deux coques sont reliées au bâti par des organes déplaçables, indexables ou de longueur réglable, de manière à régler ou déterminer la position des coques sans modifier leur forme en fonction du diamètre extérieur des roues à équilibrer et à entourer.

En raison du poids important des roues à équilibrer et de la masse importante représentée par la tête d'entraînement en rotation, le centre de gravité d'une équilibreuse comportant une roue montée sur la tête est susceptible de varier en fonction des dimensions de la roue à équilibrer.

C'est pourquoi, les équilibreuses de type connu sont généralement munies d'un contrepoids disposé du côté du bâti opposé à la tête d'entraînement en rotation.

La hauteur et la variabilité du centre de gravité imposait jusqu'ici d'utiliser des élingues ou des moyens de levage pour effectuer la manutention des équilibreuses de type connu. Ceci présente l'inconvénient de nécessiter un équipement approprié coûteux et de hauteur parfois incompatible avec celle des ateliers d'équilibrage.

L'invention a également pour but de remédier à cet inconvénient, en créant une équilibreuse apte à être soulevée par en dessous lors de la manutention, sans risque de basculement ou de balancement en cours de transport.

L'invention a pour objet une équilibreuse de roue de véhicule, du type comportant un bâti de support, une tête d'entraînement en rotation apte à recevoir de manière démontable une roue à équilibrer et comportant des capteurs appropriés reliés à une centrale électronique de mesure de contrôle et de commande interactifs, ainsi qu'un organe de protection enveloppant la roue montée de manière à éviter une projection indésirable vers l'extérieur de particules et à protéger l'opérateur lors de la rotation de la roue, caractérisée en ce que le bâti de support présente une ouverture de passage et un décrochement latéral prédéterminés pour recevoir deux fourches d'appareil de levage et de manutention et en ce que le bâti de support présente trois pieds d'appui disposés de part et d'autre de ladite ouverture de passage.

Selon d'autres caractéristiques de l'invention :
- le décrochement latéral est situé du côté du bâti de support, où se trouve la tête d'entraînement en rotation ;
- le décrochement latéral et l'ouverture de passage sont positionnés et déterminés en dimensions, de manière à assurer la stabilité de l'équilibreuse en cours de manutention à la fois dans la position d'ouverture de l'organe de protection et dans la position de fermeture de l'organe de protection ;
- le décrochement latéral et l'ouverture de passage sont positionnés et déterminés en dimensions, de manière à assurer la stabilité de l'équilibreuse en cours de manutention avec une roue montée sur la tête d'entraînement en rotation.

L'invention sera mieux comprise grâce à la description qui va suivre donnée à titre d'exemple non limitatif en référence aux dessins annexés dans lesquels :

La figure 1 représente schématiquement une vue en perspective d'une équilibreuse selon l'invention.

La figure 2 représente schématiquement une vue en élévation de face d'une équilibreuse selon l'invention avec organe de protection ouvert.

La figure 3 représente schématiquement une vue en élévation de face d'une équilibreuse selon l'invention avec organe de protection en position de fermeture.

La figure 4 représente schématiquement une vue de dessous d'une équilibreuse selon l'invention.

La figure 5 représente schématiquement une vue en perspective partielle d'une équilibreuse selon l'invention.

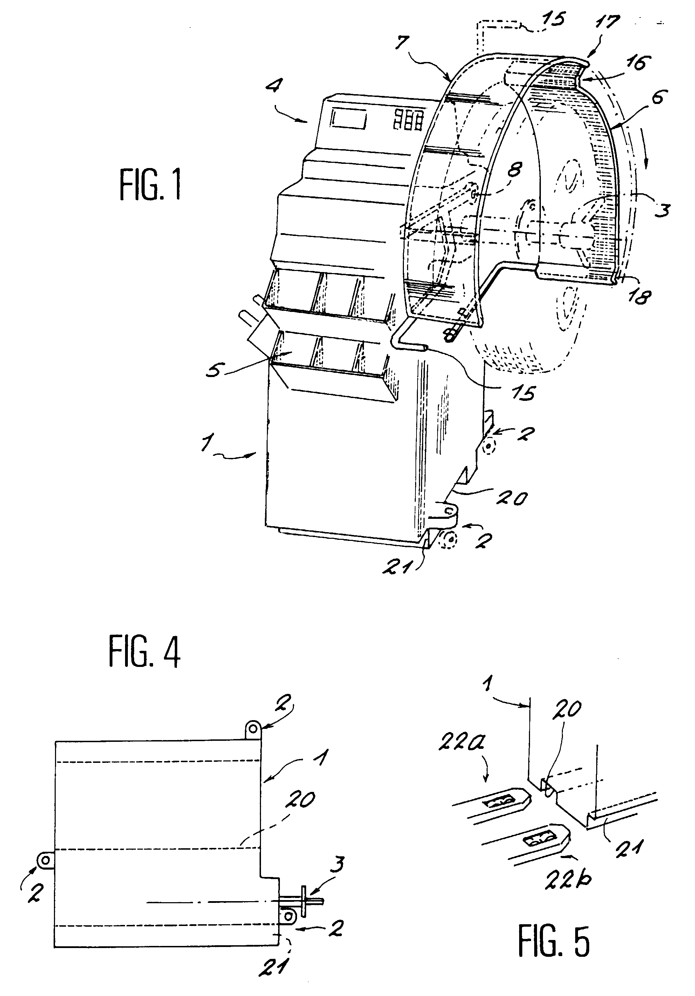

En référence aux figures 1 à 3, une équilibreuse selon l'invention comporte un bâti 1 de support reposant par des pieds 2 appropriés de contact sur le sol, une tête d'entraînement 3 en rotation schématisée par l'axe 3 d'entraînement en rotation apte à recevoir de manière démontable une roue à équilibrer, un pupitre 4 de commande et de contrôle comportant un écran de dialogue interactif pour recevoir et envoyer des signaux de mesure, de commande et de contrôle à la tête d'entraînement en rotation et indiquer à l'opérateur la suite des opérations.

Un bac de réception de masses d'équilibrage ou de petit outillage est avantageusement prévu en 5, de manière connue en soi.

Selon l'invention, un organe de protection apte à envelopper une roue montée sur la tête 3 d'entraînement en rotation de manière à éviter une projection indésirable de particules et à protéger l'opérateur lors de la rotation de la roue montée est réalisé en deux parties, une première coque 6 fixe par rapport au bâti 1 de support et une deuxième coque 7 rabattable articulée autour d'un axe 8 de rotation sensiblement horizontal. La coque fixe 7 est de préférence fixée de manière démontable au châssis 1 par des organes déplaçables, indexables ou de longueur réglable, par exemple à l'aide d'une barrette de liaison fixée à l'aide de boulons 9a, 9b, 9c au bâti 1 et solidaire de la coque fixe 6 en 10 au moyen d'une pièce en forme d'équerre fixée par un boulon approprié, ou par surmoulage de la barrette précitée. La coque fixe 6 est généralement fixée en au moins deux points 10 et 11 de manière à rester solidaire du bâti 1 et à éviter toute vibration indésirable lors de l'entraînement en rotation de la roue de véhicule à équilibrer. La coque rabattable 7 est montée sur un châssis 12 articulé en 8 comportant un premier tube 13 relié sensiblement radialement à l'arbre correspondant de rotation 8 et une branche 14 raccordée à l'extrémité avant de la coque rabattable 7. Une poignée de préhension et de maintien 15 est prévue à cette extrémité avant pour rabattre la coque mobile 7 lors de l'ouverture de la fermeture de l'organe de protection.

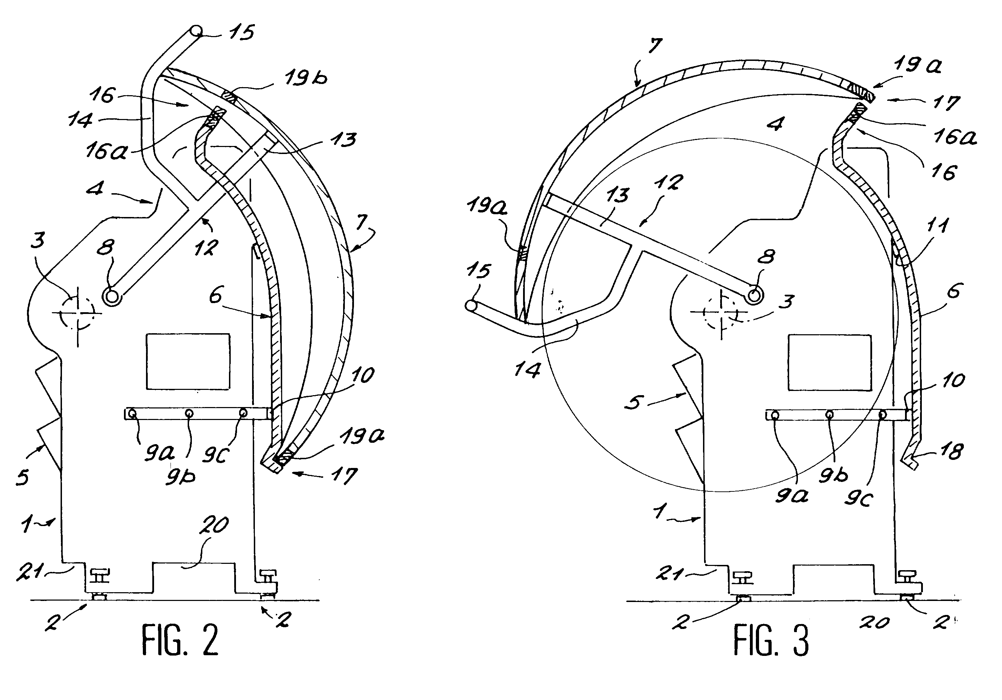

La première coque fixe 6 présente avantageusement une extrémité supérieure 16 s'étendant sensiblement radialement par rapport au centre 3 d'entraînement en rotation de la roue. Cette extrémité supérieure 16 est coiffée avec jeu par une première extrémité 17 de la deuxième coque rabattable. Le jeu prévu permet le rabattement de la coque 7 derrière la coque 6 dans la position de la figure 2 par action sur la poignée 15, où l'extrémité 17 vient reposer et est maintenue dans un logement 18 de réception formé par l'extrémité inférieure de la coque fixe 6.

En position ouverte, la coque mobile 7 est ainsi maintenue en position stable du fait de l'appui de son extrémité inférieure 17 dans le logement 18 de la coque fixe 6 tandis qu'en position fermée, une butée mécanique non représentée empêche la chute de la coque mobile 7 vers l'avant et vers le bas.

Bien entendu, l'invention s'étend également au cas où la coque mobile 7 est immobilisée en position ouverte et fermée par des butées mécaniques appropriées de rotation.

Avantageusement, on prévoit des moyens de détection de position permettant de connaître la position relative des coques 6 et 7 l'une par rapport à l'autre. A cet effet, un capteur de détection magnétique 16a est prévu à l'extrémité 16 de la coque fixe 6 et deux aimants 19a, 19b sont prévus sur la coque mobile 7 de façon à fournir un signal de fermeture ou d'ouverture de l'organe de protection comprenant les deux coques 6 et 7.

Bien entendu, le signal d'ouverture ou de fermeture peut être utilisé dans un programme d'interdiction ou d'autorisation d'entraînement en rotation de la roue montée sur l'arbre correspondant à l'axe 3, ou peut être utilisé pour actionner un système de freinage d'urgence en cas d'ouverture intempestive de l'organe de protection, ou fournir une autorisation d'ouverture de l'organe de protection lorsque la vitesse d'entraînement en rotation de la roue est inférieure à une vitesse prédéterminée. Ces variantes de commandes programmées font partie de la présente invention.

Le bâti 1 comporte à son extrémité inférieure une ouverture 20 et un décrochement latéral 21. L'ouverture 20 et le décrochement latéral 21 présente des dimensions prédéterminées correspondant à la réception de deux fourches 22a, 22b d'un appareil de levage et de manutention de type connu opérant par soulèvement. Cette disposition dans laquelle le décrochement latéral 21 est situé du côté du bâti de support où se trouve la tête 3 d'entraînement en rotation, de manière que la fourche 22b s'étende au moins partiellement extérieurement par rapport à la verticale passant par l'axe de rotation 3, permet d'assurer la stabilité de l'équilibreuse en cours de manutention dans toutes les positions. C'est ainsi que l'équilibreuse peut être soulevée et transportée dans la position d'ouverture de l'organe de protection (figure 2), dans la position de fermeture de l'organe de protection (figure 3) et dans l'une ou l'autre de ces positions avec une roue montée sur la tête d'entraînement en rotation correspondant à l'axe 3.

L'invention prévoit également que trois pieds de support 2 soient disposés de part et d'autre de l'ouverture de passage 20 : deux pieds de support 2 sont disposés de part et d'autre du bâti 1, et de part et d'autre de la projection verticale de l'axe 3 correspondant à l'arbre d'entraînement en rotation de la roue à équilibrer, de manière à équilibrer les moments de réaction au couple d'entraînement de la roue en rotation ; un troisième pied 2 est fixé à une extrémité avant du châssis 1, de manière à compenser les couples de basculement vers l'avant résultant du poids de la roue à équilibrer.

L'invention permet ainsi d'améliorer grandement la facilité de travail lors des opérations d'équilibrage, notamment la manutention de l'équilibreuse pour faciliter les opérations de nettoyage et changer l'emplacement d'équilibrage, ainsi que les opérations de mise en place, du fait que l'emprise de la machine au sol est également réduite par la disposition prévoyant un organe de protection en deux parties laissant l'accès libre pour une fixation, une manutention et une dépose de la roue et enveloppant la roue montée de manière étroite en éliminant toute projection indésirable de particules vers l'extérieur.

L'invention décrite en référence à un mode de réalisation particulier n'y est nullement limitée mais couvre au contraire toute modification de forme et toute variante de réalisation dans le cadre et l'esprit de l'invention.

## Revendications

1. Equilibreuse de roue de véhicule, du type comportant un bâti (1) de support, une tête (3) d'entraînement en rotation apte à recevoir de manière démontable une roue à équilibrer et comportant des capteurs appropriés reliés à une centrale électronique (4) de mesure, de commande et de contrôle interactifs, ainsi qu'un organe de protection enveloppant la roue montée de manière à éviter une projection indésirable vers l'extérieur de particules et à protéger l'opérateur lors de la rotation de la roue, caractérisée en ce que l'organe de protection est réalisé en deux parties : une première coque (6) fixe par rapport au bâti (1) de support et une deuxième coque (7) rabattable articulée autour d'un axe de rotation (8) sensiblement horizontal, de manière à réduire la masse déplaçable en permettant l'ouverture et la fermeture manuelles de l'organe de protection sans moyen d'assistance et sans contrepoids et réduire l'emprise au sol de l'équilibreuse.

2. Equilibreuse selon la revendication 1, caractérisée en ce que la première coque (6) fixe présente une extrémité supérieure (16) s'étendant sensiblement radialement par rapport au centre d'entraînement (3) en rotation de la roue, cette extrémité supérieure (16) étant coiffée avec un jeu permettant le rabattement par une première extrémité de la deuxième coque (7) rabattable.

3. Equilibreuse selon la revendication 1 ou la revendication 2, caractérisée en ce que l'angle au centre d'entraînement en rotation de la roue de la deuxième coque (7) rabattable est supérieur à l'angle au centre d'entraînement en rotation de la roue de la première coque (6) fixe.

4. Equilibreuse selon l'une des revendications précédentes, caractérisé en ce que la première coque (6) présente une extrémité inférieure (18) formant un logement de réception et de maintien de la deuxième coque (7) rabattue en position ouverte.

5. Equilibreuse selon l'une des revendications précédentes, caractérisée en ce que la deuxième coque (7) rabattable est montée sur un châssis (12) tubulaire articulé autour dudit axe (8) de rotation sensiblement horizontal.

6. Equilibreuse selon l'une quelconque des revendications précédentes, caractérisée en ce qu' une extrémité de la deuxième coque (7) rabattable porte une poignée (15) ou organe analogue de préhension et de rabattement.

7. Equilibreuse selon l'une des revendications précédentes, caractérisée en ce que les deux coques (6,7) sont reliées au bâti (1) par des organes déplaçables, indexables ou de longueur réglable, de manière à régler ou déterminer la position des coques (6,7) sans modifier leur forme en fonction du diamètre extérieur des roues à équilibrer et à entourer.

8. Equilibreuse de roue de véhicule selon l'une quelconque des revendications précédentes, caractérisée en ce que le bâti (1) de support présente une ouverture (20) de passage et un décrochement (21) latéral prédéterminés pour recevoir deux fourches (22a, 22b) d'appareil de levage et de manutention et en ce que le bâti (1) de support présente trois pieds (2) d'appui disposés de part et d'autre de ladite ouverture (20) de passage.

9. Equilibreuse selon la revendication 8, caractérisée en ce que le décrochement latéral (21) est situé du côté du bâti (1) de support où se trouve la tête (3) d'entraînement en rotation.

10. Equilibreuse selon la revendication 8 ou la revendication 9, caractérisée en ce que le décrochement latéral (21) et l'ouverture (22) de passage sont positionnés et déterminés en dimensions, de manière à assurer la stabilité de l'équilibreuse en cours de manutention à la fois dans la position d'ouverture de l'organe de protection et dans la position de fermeture de l'organe de protection.

11. Equilibreuse selon l'une quelconque des revendications 8 à 10, caractérisée en ce que le décrochement latéral (21) et l'ouverture de passage (20) sont positionnés et déterminés en dimensions, de manière à assurer la stabilité de l'équilibreuse en cours de manutention avec une roue montée sur la tête (3) d'entraînement en rotation.
